# EUROPÄISCHE PATENTANMELDUNG

(11) **EP 4 737 060 A1**
(43) Veröffentlichungstag der Anmeldung: **06.05.2026**
(21) Anmeldenummer: 25213312.9
(22) Anmeldetag: 04.11.2025
(51) Int. Cl.: B23Q 17/24

(54) **WERKZEUGMASCHINE, INSBESONDERE SCHLEIFMASCHINE, UND VERFAHREN ZU DEREN STEUERUNG**

(30) Priorität: 05.11.2024 DE 102024132188
(71) Anmelder: Fritz Studer AG, 3612 Steffisburg (CH)
(72) Erfinder: Sätzler, Alexander Michael, 3612 Steffisburg (CH); Conrad, Georg, 7050 Arosa (CH); Gutmann, Eric, 3006 Bern (CH); Fiebelkorn, Frank, 3600 Thun (CH)
(74) Vertreter: Witte, Weller & Partner Patentanwälte mbB

(57) **Zusammenfassung**

Eine Werkzeugmaschine (10) weist ein Maschinenbett (14) und eine Einhausung (16) auf, die einen Arbeitsraum (18) umschließt. Im Arbeitsraum (18) sind ein Werkzeugspindelstock (20) zur Aufnahme eines Werkzeugs (24) und ein Werkstückhalter (40) zur Aufnahme eines Werkstücks (32) angeordnet. Der Werkzeugspindelstock (20) und der Werkstückhalter (40) sind mittels einer Maschinenkinematik (50) relativ zueinander in zumindest zwei Achsen (52, 56) NC-gesteuert verfahrbar, um ein am Werkstückhalter (40) gehaltenes Werkstück (32) zu bearbeiten. Eine auf eine Objektebene (72) ausgerichtete Kamera (70) dient zur visuellen Überwachung zumindest eines Teilbereichs des Arbeitsraumes (18). Die Kamera (70) ist dazu ausgebildet, eine Abbildung der Objektebene (72) zu erzeugen. Die Kamera (70) ist in Bezug auf die Objektebene (72) geometrisch kalibriert. Ein Bildschirm (68) dient zur Anzeige eines Wiedergabebildes (74) der von der Kamera (70) bereitgestellten Abbildung der Objektebene (72). Eine Steuereinrichtung (60) der Werkzeugmaschine (10) ist dazu ausgebildet, Bedienereingaben im Wiedergabebild (74) in Positionswerte in einem Maschinenkoordinatensystem (124) zur Steuerung der Maschinenkinematik (50) zu wandeln. Ein Verfahren dient zur Steuerung einer solchen Werkzeugmaschine (10).

## Beschreibung

Die vorliegende Offenbarung bezieht sich auf eine Werkzeugmaschine, insbesondere eine Schleifmaschine, und ein Verfahren zur Steuerung einer solchen. In beispielhaften Ausgestaltungen bezieht sich die vorliegende Offenbarung auf stationäre Rundschleifmaschinen, die eine einen Arbeitsraum umgebende Einhausung aufweisen, wobei in der Einhausung eine Kamera zur Überwachung zumindest eines Teilbereichs des Arbeitsraumes angeordnet ist.

Aus der EP 2 305 417 A2 ist ein optisches Assistenzsystem für Werkzeugmaschinen bekannt, bei dem eine Kamera im Arbeitsraum positioniert ist, um die Bearbeitung von oben zu überwachen, und ein mit der Kamera erfasstes Bild außerhalb des Arbeitsraums auf einem Bildschirm visualisiert wird. Hauptanwendung ist die (indirekte) visuelle Überwachung des Bearbeitungsvorgangs.

Aus der JP 2008-105119 A ist eine Schleifmaschine bekannt, bei der eine von oben auf den Arbeitsraum blickende Kamera verwendet wird, um mittels der sogenannten Teach-In-Methode anhand der Bearbeitung eines Dummy-Werkstücks schrittweise anhand der angefahrenen Positionen ein NC-Programm zu erstellen. Die JP 2008-105119 A schweigt jedoch dazu, wie etwaige Verzerrungen bei der notwendigerweise perspektivischen Aufnahme mit der Kamera bei der Ermittlung der Positionsdaten und der hierauf basierenden NC-Daten anhand des Kamerabildes berücksichtigt und korrigiert werden.

Aus der US 8,216,025 B2 ist eine Profilschleifmaschine bekannt, bei der der Arbeitsraum mit einer Kamera von oben überwacht wird. Auch dieses Dokument befasst sich nicht mit der Frage, wie etwaige Verzerrungen bei der notwendigerweise perspektivischen Aufnahme mit der Kamera zu behandeln sind.

Aus der DE 198 40 801 A1 ist eine Werkzeugschleifmaschine bekannt, die ein optisches Messsystem aufweist, das eine Beleuchtungseinheit und eine CCD-Kamera nutzt, um eine Außenkontur und axiale Position scharfkantiger Werkzeuge zu erfassen. Die CCD-Kamera ist als Zeilenkamera oder Matrixkamera gestaltet. Die CCD-Kamera und die Beleuchtungseinheit sind auf einer gemeinsamen optischen Achse einander gegenüberliegend angeordnet und ideal auf ein hier als Werkstück dienendes Werkzeug ausgerichtet. Ziel ist die Bereitstellung von Korrekturdaten für den Schleifprozess. Die DE 198 40 801 A1 setzt also darauf, dass Kamera und Beleuchtungseinheit hinsichtlich der konkreten Messaufgabe verzerrungsfrei/verzeichnungsfrei betreibbar sind, damit Messungen durchgeführt werden können. Die DE 198 40 801 A1 befasst sich nicht mit der Frage, wie etwaige Verzerrungen zu behandeln sind.

Aus der DE 196 29 616 C2 ist eine Messvorrichtung zum Messen und Prüfen von Werkzeugen bekannt, wobei die Messvorrichtung als separate Messstation gerade nicht in eine Werkzeugmaschine integriert ist. Die Messvorrichtung nutzt eine Kamera, die ideal in Bezug auf das zu vermessende Werkzeug orientiert ist. Die DE 196 29 616 C2 befasst sich nicht mit der Frage, wie etwaige Verzerrungen zu behandeln sind.

Werkzeugmaschinen, insbesondere solche in Form von Schleifmaschinen, sind allgemein bekannt. Beispielsweise offenbart die EP 3 936 281A1 verschiedene Konfigurationen sogenannter Rundschleifmaschinen, bei denen sowohl das Werkzeug (Schleifscheibe) als auch das Werkstück rotatorisch antreibbar sind. Mit NC-gesteuerten Rundschleifmaschinen ist häufig auch eine sogenannte Unrundbearbeitung ermöglicht, wenn die gesteuerten Achsen der Maschinenkinematik entsprechend angesteuert werden, um die gewünschten Zustellbewegungen zu erzeugen. Rundschleifmaschinen (und Unrundschleifmaschinen) können grundsätzlich für die Außenbearbeitung (beispielsweise Außenrundschleifen) und für die Innenbearbeitung (beispielsweise Innenrundschleifen) konfiguriert sein.

Schleifmaschinen weisen regelmäßig Einhausungen auf, die einen Arbeitsraum umgeben. Auf diese Weise wird beispielsweise eine Verschmutzung der Umgebung mit Kühlschmierstoffen, Abrieb und dergleichen verhindert. Ferner dienen Einhausungen dem Bedienerschutz. Schließlich schützen Einhausungen auch interne Komponenten der Schleifmaschine vor äußeren Einwirkungen.

Die Einhausungen von Werkzeugmaschinen sind regelmäßig mit Sichtfenstern versehen, über die die Bearbeitung visuell überwacht werden kann. Ferner sind häufig Türen und dergleichen vorgesehen, sodass ein Zugang zum Arbeitsraum für Maschinenbediener, Servicekräfte und dergleichen ermöglicht ist. Werkzeugmaschinen weisen häufig eine Bedienerseite auf, an der ein Zugang zum Arbeitsraum ermöglicht ist, zumindest aber ein Sichtfenster zur Verfügung steht. An der Bedienerseite sind häufig Bedienerschnittstellen (Bedienpanel oder dergleichen) angeordnet, damit ein Bediener die Werkzeugmaschine steuern und gleichzeitig visuell über Sichtfenster/Zugangsöffnungen überwachen kann.

Beim operativen Betrieb müssen etwaige Zugangsöffnungen schon aus Sicherheitsgründen regelmäßig geschlossen sein. Ferner erfolgen Bearbeitungen regelmäßig unter Verwendung von Kühlschmierstoffen. Schließlich sind in Arbeitsräumen von Werkzeugmaschinen häufig neben den obligatorischen Komponenten wie Werkstückhalterung und Werkzeughalter nebst etwaigen Antrieben dafür weitere Komponenten verbaut, beispielsweise Handhabungstechnik für einen Werkstückwechsel, Messtechnik, zusätzliche Bearbeitungseinheiten mit Werkzeugen und dergleichen. Insbesondere bei Schleifmaschinen sind häufig auch Abbrichtwerkzeuge zum Abrichten der Schleifwerkzeuge innerhalb des Arbeitsraums angeordnet.

Insgesamt ist der Arbeitsraum damit häufig schlecht einsehbar, sodass eine (direkte) visuelle Überwachung erschwert ist. Es ist grundsätzlich bekannt, Kameras im Arbeitsraum zu positionieren, um eine visuelle Überwachung des Arbeitsraums über Bildschirme von außen zu ermöglichen. Eine lediglich visuelle Überwachung erlaubt jedoch keine unmittelbare Einflussnahme auf den Bearbeitungsprozess unter Nutzung geometrischer Parameter, insbesondere eines Maschinenkoordinatensystems. Das Maschinenkoordinatensystem ist das Grundkoordinatensystem einer Werkzeugmaschine zur Beschreibung ihrer Arbeitsachsen.

Die Erstellung von NC-Code mittels CAM-Programmen (Computer-aided manufacturing) auf Basis von CAD-Daten ist verbreitet. Die Ansicht der CAD-Daten erlaubt eine genaue Korrelation zwischen dem Maschinenkoordinatensystem und dem CAD-Daten-Koordinatensystem. Insbesondere erlaubt die Ansicht von CAD-Modellen und hierauf basierenden CAM-Modellen eine genaue Auswahl von Positionen am Bildschirm, weil die rechnergestützte Darstellung der (virtuellen) Modelle einfach in Übereinstimmung mit dem Maschinenkoordinatensystem gebracht werden kann.

Wenn jedoch stattdessen auf eine Live-Darstellung mittels Kamera erzeugter Bilder zurückgegriffen wird, sind (optische) Verzerrungen und Verzeichnungen unausweichlich. Beispielsweise betrifft dies projektive Verzerrungen, perspektivische Verzerrungen und dergleichen, die der Position, Ausrichtung und den optischen Eigenschaften der verwendeten Kamera geschuldet sind. Daher ist es mit Herausforderungen verbunden, auf Basis einer solchen Wiedergabe eines Kamerabildes Positionsinformationen im Maschinenkoordinatensystem zu ermitteln.

Gleichwohl ist es bei bestimmten Anwendungen wünschenswert, Steuerbefehle oder Positionsangaben für die Steuerung der Werkzeugmaschine anhand eines Kamerabildes zu generieren. Dies kann beispielsweise die Einrichtung einer Werkzeugmaschine, Messaufgaben, das Abrichten des Werkzeugs und ähnliche Tätigkeiten betreffen. Solche Tätigkeiten erfordern regelmäßig eine zumindest teilweise händische Steuerung. Eine denkbare Aufgabe besteht beispielsweise darin, das Werkzeug (Schleifscheibe oder dergleichen), das Werkzeug oder ein Messorgan ausgehend von einer Ist-Position in eine Vorposition/Annäherungsposition zu bewegen, um dort eine Prozedur zu starten, die beispielsweise eine genaue Annäherung an eine finale Zielposition umfasst.

Derartige und vergleichbare Tätigkeiten können beispielsweise eine händische Steuerung der Achsen der Werkzeugmaschine (über Drehräder oder dergleichen) umfassen, um ein Werkzeug, ein Werkstück, ein Messorgan oder dergleichen zwischen zwei Positionen zu verfahren. Es ist nicht unüblich, dass der Maschinenbediener bei solchen teilweise händisch gesteuerten Aufgaben wiederholt (durch eine Zugangsöffnung oder ein Sichtfenster) in den Arbeitsraum blickt, um sich dort einen Überblick der Ist-Positionen der beteiligten Komponenten zu verschaffen. Mit anderen Worten muss sich ein Bediener abwechselnd auf ein Bedienerpult und den Arbeitsraum konzentrieren, um ausgehend von der Startposition Schritt für Schritt die Zielposition anzufahren. Dies erfordert eine hohe Konzentration, gleichwohl ist eine gewisse Anfälligkeit für Fehler gegeben.

Vor diesem Hintergrund liegt der vorliegenden Offenbarung die Aufgabe zugrunde, eine Werkzeugmaschine, insbesondere eine Schleifmaschine, anzugeben, bei der teilweise händisch gesteuerte Vorgänge wie Einrichtvorgänge, Messaufgaben, Abrichtvorgänge und Ähnliches, einfach vonstattengehen können, wobei die Gefahr für Fehlbedienungen möglichst verringert werden kann. Insbesondere soll eine zumindest teilweise händische Steuerung der Werkzeugmaschine ohne unmittelbare Einsichtnahme durch Fenster oder dergleichen in den Arbeitsraum ermöglicht sein. Vorzugsweise soll die Steuerung anhand kamerabasierter Übersichtsbilder ermöglicht sein. Ferner soll anhand der bereitgestellten Kamerabilder die Möglichkeit zur Steuerung der Werkzeugmaschine unter Berücksichtigung des Maschinenkoordinatensystems gegeben sein. Schließlich soll ein korrespondierendes Verfahren angegeben werden, das auf Basis einer kamerabasierten visuellen Überwachung des Arbeitsraums Einrichtvorgänge und vergleichbare Arbeiten mit hoher Genauigkeit und geringer Fehleranfälligkeit ermöglicht. Insbesondere soll der Bedienerkomfort erhöht werden.

Gemäß einem ersten Aspekt bezieht sich die vorliegende Offenbarung auf eine Werkzeugmaschine, insbesondere Schleifmaschine, die Folgendes aufweist:
- ein Maschinenbett,
- eine Einhausung, die einen Arbeitsraum umschließt,
- einen im Arbeitsraum angeordneten Werkzeugspindelstock zur Aufnahme eines Werkzeugs, insbesondere einer Schleifscheibe,
- einen im Arbeitsraum angeordneten Werkstückhalter, insbesondere eine Werkstückspindel, zur Aufnahme eines Werkstücks,
   wobei der Werkzeugspindelstock und der Werkstückhalter mittels einer Maschinenkinematik relativ zueinander in zumindest zwei Achsen NC-gesteuert verfahrbar sind, um ein am Werkstückhalter gehaltenes Werkstück zu bearbeiten,
- eine auf eine Objektebene ausgerichtete Kamera zur visuellen Überwachung zumindest eines Teilbereichs des Arbeitsraumes,
   wobei die Kamera dazu ausgebildet ist, eine Abbildung der Objektebene zu erzeugen, und
   wobei die Kamera in Bezug auf die Objektebene geometrisch kalibriert ist,
- einen Bildschirm zur Anzeige eines Wiedergabebildes der von der Kamera bereitgestellten Abbildung der Objektebene, und
- eine Steuereinrichtung, die dazu ausgebildet ist, Bedienereingaben im Wiedergabebild in Positionswerte in einem Maschinenkoordinatensystem zur Steuerung der Maschinenkinematik zu wandeln.

Die Aufgabe der Offenbarung wird auf diese Weise gelöst.

Mit der offenbarungsgemäßen Lösung ist auch bei einer vergleichsweise ungünstig im Arbeitsraum positionierten Kamera eine Transformation zwischen einem Anzeigekoordinatensystem (des Bildschirms) und dem Maschinenkoordinatensystem ermöglicht, sodass Bedienereingaben im (verzerrungsbehafteten) Wiedergabebild in Positionsangaben im Maschinenkoordinatensystem überführt werden können.

In beispielhaften Ausgestaltungen ist das Wiedergabebild immanent verzerrungsbehaftet, und gleichwohl werden auf Basis der anhand des Wiedergabebildes vorgenommenen Bedienereingaben akkurate Positionswerte ermittelt, die zur Steuerung der Maschinenkinematik, also zur Bewegung von Komponenten, nutzbar sind.

Im Sinne der vorliegenden Offenbarung ist unter der geometrischen Kalibrierung der Kamera in erster Linie die Bestimmung der geometrischen Modellparameter der Kamera zu verstehen, umfassend die Ermittlung etwaiger Verzerrungen und Verzeichnungen in Bezug auf die Objektebene. Auf diese Weise kann eine Transformation zwischen dem Maschinenkoordinatensystem und dem Anzeigekoordinatensystem erfolgen, sodass die Auswahl von Punkten im Anzeigekoordinatensystem (auf dem Bildschirm) in Positionsangaben zu diesen Punkten im Maschinenkoordinatensystem überführt werden kann.

Der Begriff "geometrische Kalibrierung der Kamera" bezieht sich beispielsweise auf die Bestimmung der geometrischen Modellparameter der Kamera in Bezug auf eine definierte Objektebene. Dies umfasst beispielsweise die Ermittlung und rechnerische Erfassung innerer Parameter (z. B. Brennweite, Hauptpunkt, Linsenverzeichnung) sowie äußerer Parameter (z. B. Position und Orientierung der Kamera im Arbeitsraum). Durch diese Kalibrierung können beispielsweise projektive, perspektivische und sonstige optische Verzerrungen erfasst werden, sodass eine mathematische Abbildung (Transformation) zwischen dem Bildkoordinatensystem der Kamera beziehungsweise dem Anzeigekoordinatensystem des Bildschirms und dem Maschinenkoordinatensystem der Werkzeugmaschine bereitgestellt werden kann. Die optische Kalibrierung ermöglicht es folglich, Bedienereingaben im verzerrungsbehafteten Wiedergabebild zuverlässig in korrespondierende Positionswerte im Maschinenkoordinatensystem zu überführen, ohne dass hierzu eine Bildentzerrung oder maschinelle Objekterkennung erforderlich ist.

Mit anderen Worten kann trotz einer optisch fehlerbehafteten Darstellung aufgrund der Verzerrung/Verzeichnung aus Eingaben am Bildschirm (beispielsweise Klick auf eine Position im angezeigten Bild) auf die zugehörigen Koordinaten im Maschinenkoordinatensystem geschlossen werden. Dies erlaubt die Auswahl von Steuerpunkten (Startpunkt, Zielpunkt und dergleichen) direkt am Bildschirm und die Nutzung der Steuerpunkte zur Ansteuerung der Maschinenkoordinaten auch bei vergleichsweise ungünstig positionierter Kamera. Selbst bei einer ideal senkrecht und mittig zum gewünschten Bildausschnitt in der Objektebene positionierten Kamera muss mit einer perspektivischen Verzerrung im angezeigten Bild gerechnet werden, sodass auch in einem solchen Fall eine Transformation zwischen dem Anzeigekoordinatensystem und dem Maschinenkoordinatensystem erforderlich ist.

Das Anzeigekoordinatensystem lässt sich beispielsweise auf die Reihen und Spalten der Pixel des Bildschirms zurückführen. Das Maschinenkoordinatensystem beschreibt die relevanten gesteuerten Achsen der Werkzeugmaschine, beispielsweise die beiden horizontalen Achsen (X-Achse und Z-Achse) bei einer Rundschleifmaschine mit horizontaler Orientierung des Werkstücks.

Die Kamera ist eine Videokamera, die Bilder mit einer hohen Bildwiederholrate aufnehmen kann (Live-Bilder). Der Bildschirm kann diese Bilder wiedergeben. Es versteht sich, dass die Wiedergabe der Bilder auch lediglich in einem Teilbereich des Bildschirms erfolgen kann.

Die vorliegende Offenbarung stellt sich nicht notwendigerweise die Aufgabe, das angezeigte Bild zu manipulieren, um verzerrungsbedingte Abweichungen zwischen dem Maschinenkoordinatensystem und dem Anzeigekoordinatensystem zu kompensieren oder zu minimieren. Es versteht sich, dass beispielsweise optische Verzeichnungen (aufgrund der verwendeten Optiken) bei der Darstellung durchaus korrigiert werden können. Jedoch lassen sich projektive Verzerrungen und/oder perspektivische Verzerrungen bei Verwendung lediglich einer Kamera mit einer festgelegten Position und Orientierung bei der Darstellung nicht ohne Weiteres korrigieren.

Stattdessen soll trotz der inhärenten Abweichung eine genaue Rücckopplung zwischen der Auswahl von Punkten im Wiedergabebild und entsprechenden Positionen im Maschinenkoordinatensystem ermöglicht sein. In Bezug auf die Objektebene sollen Bildpositionen im Wiedergabebild in reale Positionen im Maschinenkoordinatensystem überführt werden können.

Die Kalibrierung der Kamera in Bezug auf die Objektebene erfolgt beispielsweise unter Nutzung von Kalibrierungsmustern, Kalibrierungsobjekten und ähnlichen Kalibrierungsreferenzen, deren Geometrie bekannt ist. Sodann kann eine Transformationsfunktion/Transformationsmatrix zwischen dem Maschinenkoordinatensystem (in Bezug auf die Objektebene) und dem Anzeigekoordinatensystem ermittelt werden.

Die Kalibrierung der Kamera berücksichtigt die jeweilige Positionierung der Kamera. In beispielhaften Ausgestaltungen erfolgt eine Rekalibrierung/Nachkalibrierung, wenn die Position und/oder Orientierung der Kamera im Arbeitsraum verändert wird. Beispielsweise kann bei einer neuen Bearbeitungsaufgabe eine Neupositionierung der Kamera mit anschließender Kalibrierung (Rekalibrierung) stattfinden, um die Kamera günstig an die neuen Gegebenheiten im Arbeitsraum anzupassen.

Bei dem Werkzeug handelt es sich insbesondere um eine Schleifscheibe, wobei die Objektebene parallel zur Rotationsachse der Schleifscheibe orientiert ist und diese insbesondere schneidet. Innerhalb der Objektebene ist üblicherweise ein Bildausschnitt definiert, der am Bildschirm angezeigt wird. Beispielsweise kann der Bildausschnitt durch optischen Zoom, Digitalzoom, Cropping (Beschneiden) verändert werden, wobei dies entsprechend bei der Transformation zwischen dem Maschinenkoordinatensystem und dem Anzeigekoordinatensystem berücksichtigt wird. Die Objektebene ist beispielsweise eine Horizontalebene (Y-Position ist konstant)

In beispielhaften Ausgestaltungen ist die Kamera senkrecht zur Objektebene orientiert. In beispielhaften Ausgestaltungen ist die Kamera senkrecht zu Objektebene und mittig zu einem maximalen Sichtfeld/Bildausschnitt positioniert. Bei einer solchen Positionierung können Verzerrungen grundsätzlich reduziert werden, jedoch sind zumindest perspektivische Verzerrungen vorhanden. Spätestens dann, wenn innerhalb des maximal möglichen Sichtfeldes ein außermittiger Teilbereich als Bildausschnitt gewählt wird, muss mit weiteren Verzerrungen gerechnet werden.

Häufig kann jedoch die Kamera nicht derart ideal in Bezug auf die Objektebene und den (maximalen) Bildausschnitt positioniert werden. Wenn also die Kamera in einem anderen Winkel als 90° in Bezug auf die Objektebene orientiert ist, treten perspektivische projektive Verzerrungen zu den perspektivischen Verzerrungen hinzu.

Verzeichnungen gehen regelmäßig auf geometrische Abbildungsfehler der verwendeten optischen Systeme zurück. Beispielsweise gibt es bei Objektiven in Abhängigkeit von der Brennweite und dem Objektabstand kissenförmige Verzeichnungen, tonnenförmige Verzeichnungen und Ähnliches.

Die Kalibrierung der Kamera in Bezug auf die Objektebene erlaubt die Ermittlung der Verzerrungen/Verzeichnungen, sodass trotz fehlerbehafteter Darstellung anhand von Bedienereingaben im Wiedergabebild eine genaue und zuverlässige Ermittlung der Maschinenkoordinaten in der Objektebene ermöglicht ist.

Die Maschinenkinematik umfasst zwei oder mehr gesteuerte Achsen, zumindest zwei orthogonal zueinander stehende Achsen (kartesische Kinematik), die jeweils eine translatorische Bewegung erlauben. Es sind Werkzeugmaschinen bekannt, bei denen der Werkzeugspindelstock in zwei Achsen beweglich ist. Dies wird beispielsweise durch einen Kreuztisch ermöglicht. Es sind auch Werkzeugmaschinen bekannt, bei denen jeweils eine Achse im Werkzeugspindelstock und im Werkzeughalter realisiert ist, auch bezeichnet als sogenannte T-Schlitten Anordnung. Bei den Achsen handelt es sich beispielsweise um eine Z-Achse (parallel zur Längsachse des Werkstücks) und eine X-Achse (orthogonal zur Längsachse des Werkstücks). In einem solchen Fall können im Rahmen der vorliegenden Offenbarung auf Basis des Wiedergabebildes aufgrund der Kalibrierung der Kamera X-Koordinaten und Z-Koordinaten im Maschinenkoordinatensystem genau ermittelt werden. Die Objektebene ist dann beispielsweise bei einem konstanten Y-Wert entlang einer Y-Achse gewählt, die orthogonal zur X-Achse und orthogonal zur Z-Achse ist.

Die vorliegende Offenbarung benötigt daher keine Maßnahmen zur maschinellen Bilderkennung (Kantenerkennung, Feature-Erkennung oder dergleichen) zur Ermittlung der Positionen im Maschinenkoordinatensystem, sondern beruht auf der geometrischen Kalibrierung der Kamera. Daher ist das System insgesamt sehr robust, wenn die Kalibrierung in Bezug auf die Objektebene erfolgt ist, ist es unerheblich, welche Komponenten dort platziert und beobachtet werden.

Der offenbarungsgemäße Einsatz eignet sich beispielsweise für solche Einsatzfälle, bei denen eine Grobpositionierung gewünscht ist. Es ist also nicht notwendigerweise erforderlich, die Zielposition hochgenau vorzugeben. Stattdessen genügt es häufig, eine Annäherungsposition anzufahren, die als (vorläufiges) Ziel dient. Eine finale Endposition kann dann beispielhaft ein Antasten mit einem Messorgan, ein definierter Kontakt des Werkzeugs mit dem Werkstück und/oder einem Abrichtwerkzeug oder dergleichen sein. Dies kann beispielsweise mittels einer automatisierten Prozedur erfolgen, die Grobpositionierung kann jedoch unter Nutzung des am Bildschirm angezeigten Wiedergabebildes erfolgen. Die Feinpositionierung kann sich anderer Hilfsmittel bedienen.

Gemäß einer beispielhaften Ausgestaltung ist die Steuereinrichtung dazu ausgebildet, anhand eines im Wiedergabebild ausgewählten Startpunkts und eines im Wiedergabebild ausgewählten Zielpunkts im Maschinenkoordinatensystem einen zu überwindenden Weg zwischen dem Startpunkt und dem Zielpunkt anzuzeigen. Auf diese Weise kann der Abstand zwischen dem Startpunkt und dem Zielpunkt in der Objektebene betragsmäßig oder über Komponenten (entlang der beiden beweglichen Achsen) bestimmt und angezeigt werden. Dies kann natürlich auch Zwischenpunkte zwischen dem Startpunkt und dem Zielpunkt betreffen.

Auf diese Weise können Positionsinformationen, die auf das Maschinenkoordinatensystem bezogen sind, im Wiedergabebild angezeigt werden. Dies kann verschiedene Arten der Darstellung umfassen. Beispielsweise können der Startpunkt und der Zielpunkt jeweils über ein Kreuz oder ein ähnliches Element gekennzeichnet sein, wobei der Abstand sowohl im Wiedergabebild selbst als auch anhand absoluter (konkrete Werte für die Achsen) oder relativer Angaben (beispielsweise Prozent des zu überwindenden Weges pro Achse oder dergleichen) benachbart zum Wiedergabebild angezeigt werden kann. Wenn die Informationen bezogen auf das Maschinenkoordinatensystem verfügbar sind, kann die Maschinenkinematik unter Beobachtung des Wiedergabebildes gezielt angesteuert werden.

Gemäß einer weiteren beispielhaften Ausgestaltung ist die Steuereinrichtung dazu ausgebildet, bei einer Relativbewegung zwischen dem Werkzeugspindelstock und dem Werkstückhalter zur Annäherung an den Zielpunkt einen verbliebenden Restweg anzuzeigen. Dies ist beispielsweise dann von Vorteil, wenn ein Vorschub entlang der Achsen (beispielsweise X-Achse und Z-Achse) händisch gesteuert wird, beispielsweise mittels Drehrad. Auf diese Weise kann sich der Bediener am Bildschirm orientieren, die beiden Achsen können gleichzeitig oder nacheinander gesteuert werden, um den verbliebenen Abstand jeweils zu reduzieren, bis das Ziel erreicht ist. Das Ziel kann eine Annäherungsposition sein, wobei ein finales Ziel mittels Feinpositionierung angefahren wird.

Die Startposition und die Zielposition können beispielsweise im Wiedergabebild mit einem Fadenkreuz oder dergleichen markiert werden. Wenn dann eine oder beide Achsen angesteuert werden, kann sich die Markierung für die Startposition als Ist-Position an die Markierung für die Zielposition annähern. Auch dies ist ein visueller Indikator für die Bewegung der Komponenten der Werkzeugmaschine. Die Position des Markers bei der Bewegung wird nicht durch Feature-Erkennung bestimmt, sondern durch die Transformation zwischen dem Maschinenkoordinatensystem und dem Anzeigekoordinatensystem. Die Transformation kann folglich in beide Richtungen erfolgen, bei der Bewegung des Markers werden auf Basis der Bewegung im Maschinenkoordinatensystem Positionen im Anzeigekoordinatensystem zur Anzeige des Markers am Bildschirm bestimmt.

Gemäß einer weiteren beispielhaften Ausgestaltung ist die Steuereinrichtung dazu ausgebildet, die Maschinenkinematik zur Erzeugung einer Relativbewegung zwischen dem Werkzeugspindelstock und dem Werkstückhalter auf Basis der Bedienereingaben und der hierauf fußenden Positionswerte mittels Streckensteuerung oder Bahnsteuerung anzusteuern. Mit anderen Worten ist es auch vorstellbar, dass die Steuereinrichtung die Maschinenkinematik auf Basis von Startpunkt, Endpunkt sowie einem automatisch ermittelten Vorschub ansteuert, um den Zielpunkt automatisiert anzufahren.

Eine Streckensteuerung beruht darauf, dass zu jeder Achse Geschwindigkeit und Position gesteuert werden. Eine Bahnsteuerung kann Bewegungen gleichzeitig entlang mehreren geregelten Achsen interpolieren, dabei werden Bewegungsabläufe der beiden Achsen miteinander synchronisiert, sodass sich im Ergebnis durch die kombinierte Bewegung die gewünschte Bewegung entlang der definierten Bahn ergibt.

Gemäß einer weiteren beispielhaften Ausgestaltung ist die Steuereinrichtung dazu ausgebildet, die Bedienereingaben in Positionswerte zu wandeln und absolute oder relative Veränderungen der Positionswerte bei der Steuerung der zumindest zwei Achsen anzuzeigen. Die Positionswerte können beispielhaft auf die X-Achse und auf die Z-Achse bezogen sein. Auf diese Weise kann der Bediener die Position im Maschinenkoordinatensystem und die Bewegung der Komponenten visuell am Bildschirm überwachen.

Gemäß einer weiteren beispielhaften Ausgestaltung ist die Steuereinrichtung ferner dazu ausgebildet, die Maschinenkinematik zur Erzeugung der Relativbewegung in einem Eilgang entlang des Bewegungspfads zwischen dem Startpunkt und dem Zielpunkt zu steuern. Wenn es beispielsweise darum geht, eine Vorposition (als Zielposition) anzufahren, kann dies grundsätzlich mit großen Vorschüben erfolgen. Das (finale) Ziel kann dann in einem Kriechgang mit deutlich kleineren Vorschüben angefahren werden.

Gemäß einer weiteren beispielhaften Ausgestaltung ist die Kamera im Arbeitsraum oberhalb des Werkstückhalters angeordnet. Allgemein ist eine orthogonale Orientierung der Kamera zu Objektebene gewünscht. Wenn dies aus baulichen Gründen im Arbeitsraum nicht möglich ist, kann auch ein von 90° abweichender Winkel gewählt werden. Der Winkel beschreibt die Orientierung der optischen Achse in Bezug auf die Objektebene. Offenbarungsgemäß erlaubt die geometrische Kalibrierung die gewünschte Transformation zwischen dem Maschinenkoordinatensystem und dem Anzeigekoordinatensystem am Bildschirm.

Gemäß einer weiteren beispielhaften Ausgestaltung ist die Objektebene eine Horizontalebene, die parallel zu einer durch den Werkstückhalter definierten Längsachse orientiert ist. Beispielhaft schneidet die Objektebene bei einer Schleifmaschine die Längsachse (Drehachse) eines drehbar gehaltenen Werkstücks. In dieser Ebene oder leicht beabstandet davon erfolgt üblicherweise ein Antasten mit Messorganen, ein Angriff mit dem Werkzeug (Schleifscheibe) und dergleichen. Auf Basis der offenbarungsgemäßen Transformation kann mit Bedienereingaben im Wiedergabebild (mit dem dortigen Anzeigekoordinatensystem des Bildschirms) auf die zugehörigen Positionen im Maschinenkoordinatensystem geschlossen werden, wodurch im Wiedergabebild ausgewählte Positionen für die Steuerung der Maschinenkinematik nutzbar sind.

Gemäß einer weiteren beispielhaften Ausgestaltung erzeugt die Kamera eine perspektivische Abbildung der Objektebene, wobei die Kamera insbesondere ortsfest innerhalb der Einhausung angeordnet ist. Dies bezieht sich insbesondere auf in der Objektebene angeordnete Objekte mit einer Höhenerstreckung orthogonal zur Objektebene. Beispielsweise weist eine Schleifscheibe (für das Außenrundschleifen) eine beträchtliche Höhenerstreckung orthogonal zur Objektebene auf, sodass perspektivische Verzerrungen häufig unvermeidbar sind. Die offenbarungsgemäße Transformation zwischen Maschinenkoordinatensystem und Anzeigekoordinatensystem berücksichtigt derartige Verzerrungen.

Gemäß einer weiteren beispielhaften Ausgestaltung ist das Wiedergabebild verzerrungsbehaftet, wobei das Wiedergabebild insbesondere eine projektive Verzerrung und/oder eine perspektivische Verzerrung aufweist. Die projektive Verzerrung entsteht durch eine nicht-orthogonale Orientierung der Kamera in Bezug auf die Objektebene. Die perspektivische Verzerrung geht insbesondere auf Objekte mit einer ausgeprägten Höhenerstreckung senkrecht zur Objektebene zurück.

Wenn lediglich eine Kamera zur Ermittlung des Wiedergabebildes im Arbeitsraum angeordnet ist, kann keine Orthorektifizierung (wie bei sogenannten Orthofotos) erfolgen, sodass das Wiedergabebild systemisch fehlerbehaftet ist. Dies wird aufgrund der geometrischen Kalibrierung bei der Transformation zwischen Maschinenkoordinatensystem und Anzeigekoordinatensystem berücksichtigt.

Gemäß einer weiteren beispielhaften Ausgestaltung weist die Werkzeugmaschine ferner ein Eingabegerät zur Erfassung der Bedienereingaben im Wiedergabebild auf, wobei das Eingabegerät zumindest als berührempfindliches Eingabegerät zur direkten Eingabe am Bildschirm oder als Eingabegerät zur indirekten Eingabe ausgestaltet ist. Bei einem Berührbildschirm (Touchscreen) können Positionen direkt im Anzeigebild durch Auswahl mit dem Finger oder einem Eingabestift (Stylus) gewählt werden. Es ist jedoch auch die Verwendung von separaten Eingabegeräten wie Tastatur, Maus, Joystick und ähnlichem vorstellbar. Als Hilfsmittel für die Anzeige können Fadenkreuze, Pfeil und dergleichen verwendet werden, die gewählte Positionen kennzeichnen. Mittels Menüführung können beispielsweise ein Startpunkt und ein Zielpunkt ausgewählt werden, woraufhin die Steuereinrichtung entsprechende Positionen im Maschinenkoordinatensystem ermittelt und zu überwindende Positionsdifferenzen anzeigt.

Gemäß einer weiteren beispielhaften Ausgestaltung weist die Werkzeugmaschine ferner zumindest einen Lichtzeiger auf, insbesondere einen Linienlaser, der zur Projektion zumindest eines Punkts oder einer Linie auf zumindest ein gegenüber der Objektebene geneigtes Maschinenteil dient, insbesondere eine Schleifscheibe, zur Hervorhebung eines Schnittpunkts oder einer Schnittlinie zwischen dem Maschinenteil und der Objektebene. Auf diese Weise kann beispielhaft im Falle einer perspektivischen oder projektiven Verzerrung ein Schnittpunkt oder einer Schnittlinie zwischen einer Komponente der Werkzeugmaschine und der Objektebene hervorgehoben werden. Dies erleichtert die Auswahl zugehöriger Punkte und Positionen im Wiedergabebild.

Gemäß einer weiteren beispielhaften Ausgestaltung weist die Werkzeugmaschine ferner eine Hilfskamera zur Erzeugung einer Hilfsansicht auf, wobei die Einhausung eine Zugangsöffnung bereitstellt, und wobei die Hilfskamera auf eine von der Zugangsöffnung abgewandte Rückseite des Werkstückhalters ausgerichtet ist. Auf diese Weise kann eine zusätzliche Hilfsansicht bereitgestellt werden, die für die Positionierung verwendbar ist. Dies bietet sich beispielsweise zur Beobachtung von Abrichtwerkzeugen sowie Abrichtvorgänge an. Abrichtwerkzeuge sind häufig an einer vom Bediener abgewandten Seite eines Werkstückspindelstocks angeordnet. Die Hilfsansicht kann als Alternative zum durch die (primäre) Kamera bereitgestellten Wiedergabebild genutzt werden. Es sind jedoch auch Lösungen mittels Bild-im-Bild-Anzeige, geteilten Bildschirm (Splitscreen) und dergleichen vorstellbar.

Gemäß einer weiteren beispielhaften Ausgestaltung stellt die Kamera zwei oder mehr Fokusbereiche bereit, wobei zwei oder mehr Objektebenen mit unterschiedlichem Objektabstand definiert sind, die an die zwei oder mehr Fokusbereiche angepasst sind. Dies erweitert die Einsatzmöglichkeiten der Kamera zur Überwachung des Arbeitsraums. Wenn es unterschiedliche Objektebenen mit unterschiedlichem Objektabstand gibt, so kann für jede Objektebene eine geometrische Kalibrierung der Kamera und hierauf basierend eine separate Transformation zwischen dem Maschinenkoordinatensystem und dem Anzeigekoordinatensystem erfolgen.

Gemäß einer weiteren beispielhaften Ausgestaltung weist die Kamera eine rotierende Scheibe zur Verschmutzungsvermeidung auf. Derartige Kameras sind für die Verwendung bei Werkzeugmaschinen und den Einsatz im Arbeitsraum geeignet. Zusätzlich trägt die Anordnung oberhalb des Werkzeugs und oberhalb des Werkstücks dazu bei, die Verschmutzungsneigung zu reduzieren.

Gemäß einer weiteren beispielhaften Ausgestaltung ist das Werkzeug eine Schleifscheibe, wobei im Arbeitsraum, insbesondere beim Werkstückhalter, zumindest ein Abrichtwerkzeug angeordnet ist, und wobei die Steuereinrichtung dazu ausgebildet ist, auf Basis der Bedienereingaben im Wiedergabebild Positionswerte im Maschinenkoordinatensystem zur Annäherung der Schleifscheibe an das Abrichtwerkzeug auszugeben. Auf diese Weise kann die Schleifscheibe schnell und zuverlässig in Annäherungsposition für das Abrichten verfahren werden, in der die Schleifscheibe an das Abrichtwerkzeug angenähert ist. Das Abrichtwerkzeug ist beispielhaft am Werkstückspindelstock gehalten.

Gemäß einer weiteren beispielhaften Ausgestaltung ist im Arbeitsraum eine Einrichtreferenz angeordnet, wobei die Steuereinrichtung dazu ausgebildet ist, auf Basis der Bedienereingaben im Wiedergabebild Positionswerte im Maschinenkoordinatensystem zur Annäherung eines Werkzeugs oder eines Messorgans an die Einrichtreferenz auszugeben. Die Einrichtreferenz kann beispielhaft zur Bestimmung der Position von weiteren Komponenten (beispielsweise Messtaster oder dergleichen) in Bezug auf das Maschinenkoordinatensystem genutzt werden. Bei der Einrichtreferenz handelt es sich beispielsweise um ein sogenanntes Einrichtkreuz, das temporär oder permanent im Arbeitsraum platzierbar ist. Die Einrichtreferenz kann jedoch auch zur Ermittlung eines Maschinennullpunkts und zum Abgleich von Wegmesssystemen der Werkzeugmaschine dienen.

Gemäß einer weiteren beispielhaften Ausgestaltung ist am Werkzeugspindelstock eine Messeinheit mit zumindest einem Messorgan angeordnet, wobei die Steuereinrichtung dazu ausgebildet ist, auf Basis der Bedienereingaben im Wiedergabebild Positionswerte im Maschinenkoordinatensystem zur Annäherung des Messorgans an die Einrichtreferenz oder das Werkstück auszugeben.

Gemäß einem weiteren Aspekt bezieht sich die vorliegende Offenbarung auf ein Verfahren zur Steuerung einer Werkzeugmaschine gemäß zumindest einer der hierin beschriebenen Ausgestaltungen, mit den folgenden Schritten:
- visuelles Überwachen zumindest eines Teilbereichs des Arbeitsraumes mit der auf die Objektebene ausgerichteten Kamera,
- Anzeige eines Wiedergabebildes der von der Kamera bereitgestellten Abbildung der Objektebene auf einem Bildschirm,
- Auswahl von Wegpunkten in dem auf dem Bildschirm angezeigten Wiedergabebild, insbesondere Auswahl eines Startpunkts und eines Endpunkts,
- Bestimmung von Positionswerten im Maschinenkoordinatensystem auf Basis der auf dem Bildschirm gewählten Wegpunkte unter Berücksichtigung der geometrischen Kalibrierung der Kamera in Bezug auf die Objektebene, und
- Anzeige der Positionswerte auf dem Bildschirm.

Auf diese Weise wird die Aufgabe der Erfindung gelöst. Das fehlerbehaftete Wiedergabebild kann trotzdem zur Auswahl von Wegpunkten (wie Startpunkt und Zielpunkt für eine gewünschte Bewegung) dienen. Die offenbarungsgemäße Transformation erlaubt eine genaue Bestimmung der zugehörigen Positionswerte.

Gemäß einer beispielhaften Ausgestaltung weist das Verfahren ferner Folgendes auf:
- Ansteuern der Maschinenkinematik zur Erzeugung einer Relativbewegung zwischen dem Werkzeugspindelstock und dem Werkstückhalter und/oder zwischen dem Werkzeugspindelstock und einem Abrichtwerkzeug im Arbeitsraum, und
- Anzeige von absoluten oder relativen Veränderungen der Positionswerte während der Relativbewegung.

Folglich kann die Bewegung (im Maschinenkoordinatensystem unter Nutzung der Maschinenkinematik) anhand des am Bildschirm bereitgestellten Wiedergabebildes überwacht werden. Dies kann auch eine gezielte Annäherung an den gewünschten Zielpunkt umfassen.

Gemäß einer weiteren beispielhaften Ausgestaltung weist das Verfahren ferner Folgendes auf:
- Projizieren zumindest eines Punkts oder einer Linie auf ein gegenüber der Objektebene geneigtes Maschinenteil zur Hervorhebung eines Schnittpunkts oder einer Schnittlinie zwischen dem Maschinenteil und der Objektebene, wobei die Projektion insbesondere auf ein am Werkzeugspindelstock aufgenommenes Werkzeug erfolgt.

Auf diese Weise wird die Auswahl von Positionen im Wiedergabebild vereinfacht, weil durch die projizierten Informationen (Punkt, Linie oder dergleichen) ein Schnittpunkt der gezeigten Objekte (beispielsweise Schleifscheibe) mit der Objektebene deutlich hervorgehoben ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Erfindung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer Ausführungsform einer Werkzeugmaschine in Form einer Schleifmaschine;
- Fig. 2:: eine vereinfachte, schematische Draufsicht einer Schleifmaschine, unter Auslassung einer Einhausung;
- Fig. 3:: eine vordere Teilansicht der Schleifmaschine gemäß Fig. 2;
- Fig. 4:: eine perspektivische Ansicht einer Schleifscheibe zur Veranschaulichung einer projektiven und perspektivischen Verzerrung;
- Fig. 5:: eine schematische Ansicht einer verzerrungsbehafteten Abbildung unter Berücksichtigung eines Maschinenkoordinatensystems;
- Fig. 6:: eine schematische Ansicht eines Bildschirms mit einem dortigen Anzeigekoordinatensystem;
- Fig. 7:: eine Überblendung der Ansichten gemäß Fig. 5 und Fig. 6 zur Veranschaulichung der gewünschten Transformation zwischen dem Maschinenkoordinatensystem und dem Anzeigekoordinatensystem;
- Fig. 8:: eine schematische Draufsicht auf eine Einrichtreferenz und ein Messorgan zur Veranschaulichung eines ersten Anwendungsbeispiels;
- Fig. 9:: eine schematische Draufsicht auf ein teilweise gezeigtes Werkstück und ein Messorgan zur Veranschaulichung eines weiteren Anwendungsbeispiels;
- Fig. 10:: eine schematische Draufsicht auf ein teilweise gezeigtes Werkstück und ein teilweise gezeigtes Werkzeug in Form einer Schleifscheibe zur Veranschaulichung eines weiteren Anwendungsbeispiels;
- Fig. 11:: eine schematische Draufsicht auf ein Abrichtwerkzeug und eine Schleifscheibe zur Veranschaulichung eines weiteren Anwendungsbeispiels; und
- Fig. 12:: ein schematisch stark vereinfachtes Blockdiagramm zur Veranschaulichung einer beispielhaften Ausführungsform eines Verfahrens zur Steuerung einer Werkzeugmaschine.

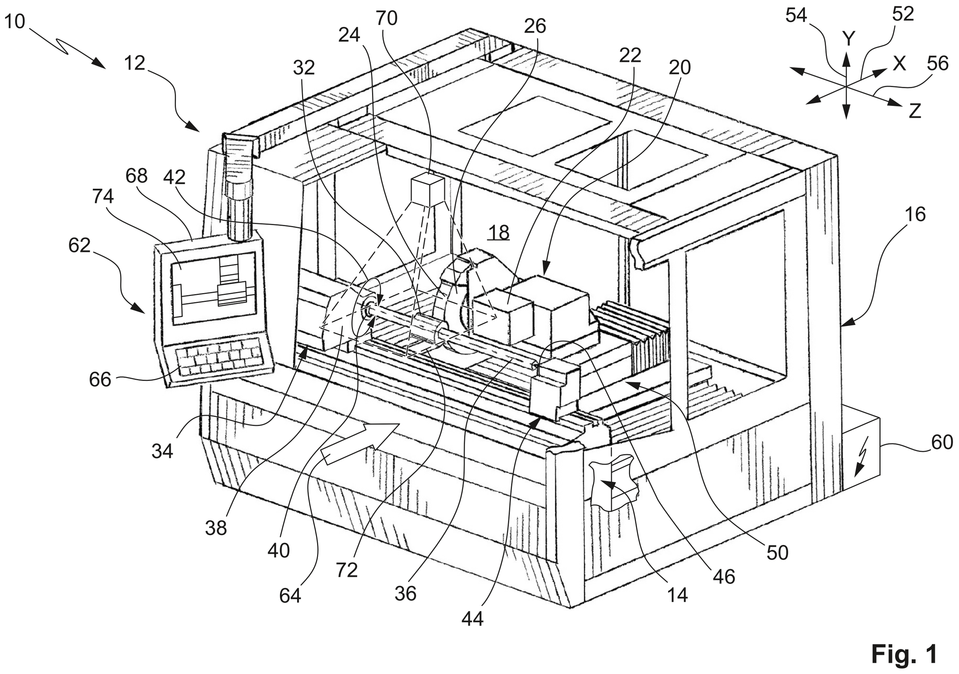

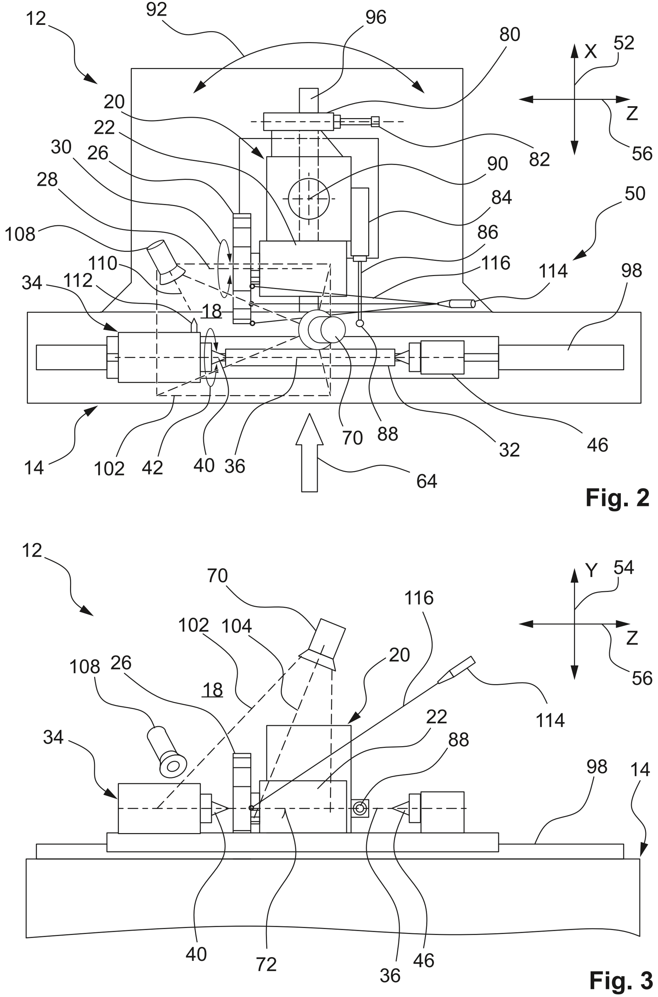

Fig. 1 veranschaulicht anhand einer schematischen, perspektivischen Darstellung eine beispielhafte Ausgestaltung einer insgesamt mit 10 bezeichneten Werkzeugmaschine, die vorliegend als Schleifmaschine 12 gestaltet ist. Es versteht sich, dass Schleifmaschinen 12 auch von der Darstellung gemäß Fig. 1 abweichende Gestaltungen aufweisen können. Die Darstellung der Schleifmaschine 12 gemäß Fig. 1 ist exemplarischer Natur und daher nicht einschränkend zu verstehen. Die Schleifmaschine 12 ist hier als Rundschleifmaschine gestaltet. In Ergänzung zu Fig. 1 zeigen Fig. 2 und Fig. 3 anhand einer schematischen Draufsicht und einer Vorderansicht eine ähnliche Gestaltung.

In Fig. 1 ist ein kartesisches Koordinatensystem X, Y, Z angedeutet. Die Z-Achse ist horizontal orientiert und parallel zur Längsachse des Werkstücks (bei einer Rundschleifmaschine). Die Y-Achse ist in Fig. 1 vertikal orientiert und beschreibt eine Höhenerstreckung senkrecht zur Z-Achse. Die X-Achse ist horizontal orientiert und beschreibt eine Tiefenerstreckung (Zustellrichtung). Das Koordinatensystem X, Y, Z dient insbesondere zur Veranschaulichung von Ausführungsbeispielen und Merkmalen und ist nicht einschränkend zu verstehen. Der Fachmann kann gegebenenfalls erforderliche Transformationen ohne Weiteres vornehmen.

Die in Fig. 1 gezeigte Schleifmaschine weist ein Maschinenbett 14 auf, das auch als Basis oder Gestell bezeichnet werden kann. Eine Einhausung 16 umschließt einen Arbeitsraum 18. Im Arbeitsraum 18 ist ein Werkzeugspindelstock 20 angeordnet, der zumindest eine Schleifspindel 22 mit einem Werkzeug 24 in Form einer Schleifscheibe 26 trägt. Die Schleifscheibe 26 ist um eine Achse 28 rotierbar, vergleiche hierzu einen gekrümmten Doppelpfeil 30 in Fig. 2.

Mit dem Werkzeug 24 kann ein Werkstück 32 bearbeitet werden. Im Ausführungsbeispiel ist am Maschinenbett 12 ein Werkstückspindelstock 34 gelagert, der eine Werkstückspindel 38 mit einem Werkstückhalter 40 zur Aufnahme des Werkstücks 32 trägt. Das Werkstück 32 ist durch die Werkstückspindel 38 um eine Längsachse 36 rotierbar, vergleiche einen mit 42 bezeichneten Doppelpfeil in Fig. 1 und Fig. 2.

Im Ausführungsbeispiel ist das Werkstück 32 zwischen dem Werkstückhalter 40 und einem Gegenhalter 46 in Form eines Reitstocks 44 aufgenommen. Der Werkstückhalter 40 und der Gegenhalter 46 sind beispielsweise als Spitzen gestaltet. Demgemäß schneidet die Längsachse 36 die Spitzen. Es versteht sich, dass auch andere Gestaltungen des Werkstückhalters 40 und des Gegenhalters 46 vorstellbar sind, beispielsweise Spannfutter, Zentrierfutter, Ausgleichsfutter mit Spitze, Planscheibe und dergleichen. Es sind auch Schleifmaschinen 12 bekannt, bei denen auf den Gegenhalter 46 verzichtet wird. Insbesondere vergleichsweise kurze Werkstücke 32 mit kleinem Längen-Durchmesser-Verhältnis können lediglich einseitig durch den Werkstückhalter 40 fixiert und aufgenommen werden. Lange Werkstücke 32 können zusätzlich durch Lünetten, Setzstöcke und dergleichen abgestützt werden.

Die Werkzeugmaschine 10 weist eine Maschinenkinematik 50 auf, die Komponenten zur Erzeugung der gewünschten Relativbewegung (vergleiche Zustellbewegung, Vorschub und dergleichen) zwischen dem Werkzeug 24 und dem Werkstück 32 umfasst. In den Ausführungsbeispielen gemäß den Figuren 1-3 ist jeweils eine Relativbewegung zwischen dem Werkzeug 24 und dem Werkstück 32 entlang der Achse 52 (vergleiche X-Achse) und der Achse 56 (vergleiche Z-Achse) ermöglicht. Ergänzend ist die (vertikale) Y-Achse in den Figuren 1 und 3 mit dem Bezugszeichen 54 bezeichnet.

In Fig. 1 ist eine Kreuzschlittenanordnung gezeigt, bei der der Werkzeugspindelstock 20 in zwei Achsen (52 und 56) verfahrbar ist, um die gewünschten Relativbewegungen in der Z-Richtung und der X-Richtung zwischen dem Werkzeug 24 und der Schleifmaschine 32 zu erzeugen. In Fig. 2 und Fig. 3 ist eine Maschinenkinematik 50 mit T-Schlittenanordnung gezeigt, bei der der Werkzeugspindelstock 20 in der Achse 52 (X-Richtung) verfahrbar ist, um eine Zustellbewegung zu erzeugen. Ferner ist der Werkstückspindelstock 34 mit dem Werkstückhalter 40 in der Achse 56 (Z-Richtung) verfahrbar, um eine Vorschubbewegung zu erzeugen.

Sowohl mit der Kreuzschlittenanordnung als auch mit der T-Schlittenanordnung können die gewünschten Bewegungsfreiheitsgrade mit der jeweiligen Maschinenkinematik 50 bereitgestellt werden.

In Fig. 1 ist eine Steuereinrichtung zur Steuerung der Werkzeugmaschine 10 mit 60 bezeichnet. Die Steuereinrichtung 60 steuert die Maschinenkinematik 50, die Schleifspindel 22, den Werkstückspindelstock 34 und weitere Komponenten der Werkzeugmaschine 10.

Zur Steuerung der Werkzeugmaschine 10 ist in Fig. 1 eine Bedienerschnittstelle 62 vorgesehen, die bei einer Bedienerseite mit einer Zugangsöffnung 64 angeordnet ist. Die Zugangsöffnung 64 zum Arbeitsraum 18 steht üblicherweise an einer Bedienerseite der Werkzeugmaschine 10 bereit. In Fig. 1 ist die Einhausung 16 der dortigen Werkzeugmaschine 10 aus Veranschaulichungsgründen teilweise unterbrochen gezeigt. Die Zugangsöffnung 64 wird üblicherweise durch Türen in der Einhausung 16 bereitgestellt. Häufig sind an der Bedienerseite Fenster und Ähnliches vorgesehen, damit der Arbeitsraum 18 von außen einsehbar ist.

Die Bedienerschnittstelle 62 ist beispielhaft als Bedienpanel gestaltet. Die Bedienerschnittstelle 62 umfasst eine Eingabeeinheit 66 und einen Bildschirm 68. Es versteht sich, dass weitere Anzeigen (weitere Bildschirme, Kontrollleuchten, numerische Anzeigen und dergleichen) verbaut sein können. Die Eingabeeinheit 66 weist beispielhaft eine Tastatur auf. Ferner sind separate Bedienknöpfe, Drehräder, Touchpads und dergleichen vorstellbar. Die Eingabeeinheit 66 kann auch weitere Eingabegeräte wie Joysticks, Mäuse, Trackballs und dergleichen aufweisen. Der Bildschirm 68 kann auch als Eingabegerät dienen, wenn er als Berührbildschirm gestaltet ist.

Die in Fig. 1 gezeigte Steuereinrichtung 60 mit der Bedienerschnittstelle 62 dient als Beispiel für verschiedene denkbare Steuerungen. Es ist grundsätzlich auch vorstellbar, die Werkzeugmaschine 10 über eine separate (entfernte) Steuerung zu steuern, mit entsprechenden Bedienerschnittstellen. Auch eine verteilte Steuerung ist vorstellbar, wobei die Bedienung sowohl direkt an der Werkzeugmaschine 10 als auch über entfernte Komponenten erfolgen kann.

Im Arbeitsraum 18 ist eine Kamera 70 zur Überwachung zumindest eines Teilbereichs des Arbeitsraumes 18 verbaut. In den Ausführungsbeispielen gemäß den Figuren 1-3 ist die Kamera 70 jeweils oberhalb des Werkzeugs 24 und/oder des Werkstücks 32 angeordnet. Die Kamera 70 ist auf eine Objektebene 72 ausgerichtet. Die Objektebene 72 ist im Ausführungsbeispiel parallel zur Längsachse 36 durch das Werkstück 32, vergleiche auch Fig. 3. Die Kamera 70 ist geometrisch in Bezug auf die Objektebene 72 kalibriert. Mit anderen Worten werden die Parameter der Kamera 70 zur Beurteilung von Verzerrungen und Verzeichnungen bei der Wiedergabe einer Abbildung der Objektebene 72 ermittelt.

Ein Wiedergabebild 74 kann am Bildschirm 68 der Bedienerschnittstelle 62 angezeigt werden. Es ist grundsätzlich auch vorstellbar, einen zusätzlichen Bildschirm für die Wiedergabe des Wiedergabebildes 74 bereitzustellen. Die Kamera 70 erlaubt eine Videoüberwachung des Arbeitsraums 18 mit Wiedergabe außerhalb der Einhausung 16. Mit anderen Worten kann ein Bediener an der Bedienerseite durch einen Blick auf die Bedienerschnittstelle 62 und dem dortigen Bildschirm 68 Aktivitäten im Arbeitsraum 18 mittelbar unter Nutzung des Kamerabildes überwachen.

Fig. 2 und Fig. 3 zeigen eine beispielhafte Konfiguration einer Schleifmaschine 12. Am Werkzeugspindelstock 20 ist neben der (primären) Werkzeugspindel 22 eine weitere Schleifspindel 80 angeordnet, die eine Schleifscheibe 82 trägt. Ferner können Zusatzkomponenten verbaut sein, beispielsweise eine Messeinheit 84, die ein Messorgan 86 mit einem Messtaster 88 aufweist. Damit die Schleifscheibe 26, die Schleifscheibe 82 und der Messtaster 88 gezielt in eine Betriebsstellung verbracht werden können, weist der Werkzeugspindelstock 20 eine sogenannte B-Achse 90 auf, um die eine Schwenkbewegung (vergleiche den gekrümmten Doppelpfeil 92 in Fig. 2) ermöglicht ist. Die B-Achse 90 ist parallel zur Y-Achse (Bezugszeichen 54 in Fig. 3) orientiert.

Der Draufsicht gemäß Fig. 2 kann eine X-Führung 96 für eine entsprechende Bewegung des Werkzeugspindelstocks 20 entlang der X-Achse (Bezugszeichen 52) sowie eine Z-Führung 98 für eine entsprechende Bewegung des Werkstückspindelstocks 34 mit dem Werkstückhalter 40 entlang der Z-Achse (Bezugszeichen 56) entnommen werden. Bewegungen entlang der X-Achse werden über eine Bewegung des Werkzeugs (Werkzeugspindelstock 20) bereitgestellt. Bewegungen entlang der Z-Achse werden über eine Bewegung des Werkstücks (Werkstückspindelstock 34) bereitgestellt. Es versteht sich, dass andere Maschinenkinematiken nutzbar sind.

Im Ausführungsbeispiel gemäß den Figuren 2 und 3 ist die Kamera 70 nicht genau orthogonal zur Objektebene 72 positioniert. Innerhalb des durch die Kamera 70 bereitgestellten Sichtfeldes kann ein Bildausschnitt 102 zur Wiedergabe im Wiedergabebild 74 (vergleiche Fig. 1) gewählt werden. Die optische Achse 104 der Kamera 70 ist im Ausführungsbeispiel nicht genau orthogonal zur Objektebene 72 orientiert. Die optische Achse 104 definiert die Blickrichtung der Kamera 70. Dies führt zu einer Schrägaufnahme mit Bezug auf die Objektebene 72 und folglich zu einer projektiven Verzerrung. Ferner tritt eine perspektivische Verzerrung auf, weil Komponenten der Schleifmaschine 10 gegenüber der Objektebene 72 eine Höhenerstreckung aufweisen. Dies trifft beispielhaft auf die Schleifscheibe 26 zu.

In Zusammenschau kann den Figuren 2 und 3 ferner eine Hilfskamera 108 mit einer optischen Achse 110 entnommen werden, die eine Blickrichtung der Hilfskamera 108 veranschaulicht. Die Hilfskamera 108 ist ebenso wie die (primäre) Kamera 70 im Arbeitsraum 18 angeordnet. Aus Sicht der Bedienerseite bzw. der dortigen Zugangsöffnung 64 (vergleiche den Blockpfeil 64 in Fig. 2) ist die Hilfskamera 108 auf Komponenten der Schleifmaschine 12 gerichtet, die vom Bediener abgewandt sind. Beispielsweise dient die Hilfskamera 108 zur ergänzenden visuellen Überwachung eines Abrichtwerkzeugs 112, das bei einer aus Sicht des Bedieners rückwärtigen Seite des Werkstückspindelstocks 34 angeordnet ist.

Das Abrichtwerkzeug 112 kann für Abrichtvorgänge genutzt werden, bei denen die Soll-Geometrie und die gewünschte Oberflächenbeschaffenheit der Schleifscheibe 26 wiederhergestellt werden. Beim Abrichten soll die Schleifscheibe 26 zunächst definiert in einen Kontakt mit dem Abrichtwerkzeug 112 gebracht werden, damit eine Abrichtprozedur durchgeführt werden kann. Die Annäherung der Schleifscheibe 26 an das Abrichtwerkzeug 112 kann grundsätzlich mit der Kamera 70 überwacht werden. Zusätzlich bietet sich jedoch eine Detailansicht unter Nutzung der Hilfskamera 108 an. Von der Kamera 70 und der Hilfskamera 108 bereitgestellte Wiedergabebilder können nacheinander oder parallel (Bild-im-Bild, Splitscreen) angezeigt werden. Auch eine Nutzung von zwei oder mehr Bildschirmen zur Wiedergabe ist vorstellbar.

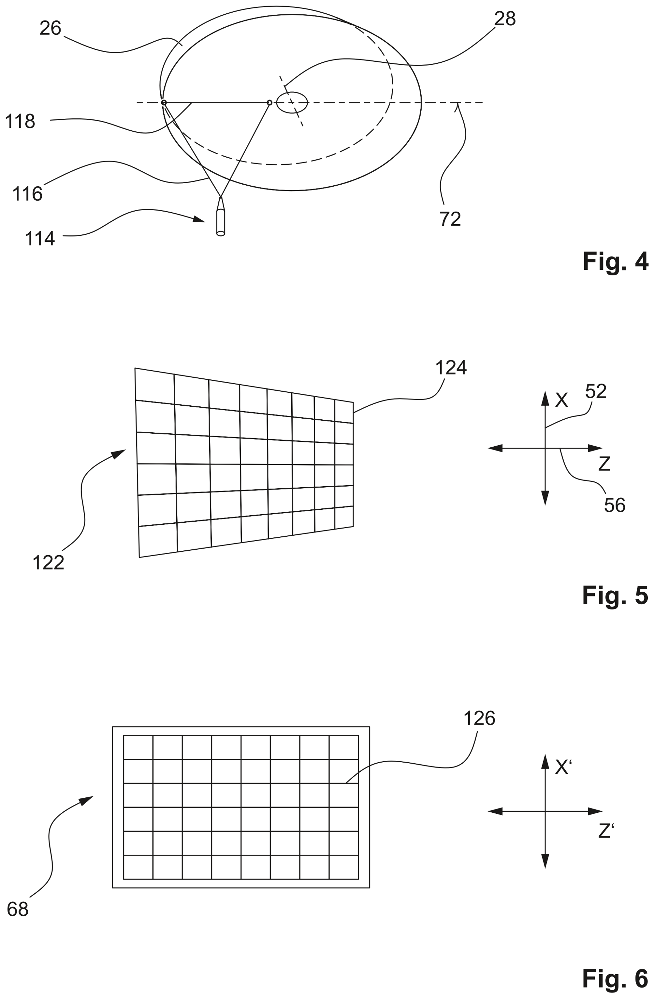

In beispielhaften Ausgestaltungen ist im Arbeitsraum 18 ein Lichtzeiger 114 angeordnet, der beispielsweise als Linienlaser gestaltet ist. Mit dem Lichtzeiger 114 kann gezielt eine Linie (oder eine andere Geometrie) auf eine Komponente im Arbeitsraum 18 der Werkzeugmaschine 10 projiziert werden. Eine beispielhafte Orientierung des Lichtzeigers 114 kann den Figuren 2 und 3 in Zusammenschau entnommen werden. In den Figuren 2 und 3 ist ein gefächerter Lichtstrahl zur Erzeugung einer Linie mit 116 bezeichnet. Der Lichtzeiger 114 erzeugt einen Lichtstrahl 116 (beispielsweise Laserlicht), der im Ausführungsbeispiel genau auf eine Schnittfläche (einer Stirnseite) der Schleifscheibe 26 mit der Objektebene 72 projiziert wird. Dies wird unter Verweis auf die perspektivische (verzerrte) Darstellung der Schleifscheibe 26 gemäß Fig. 4 erläutert.

Fig. 4 zeigt eine denkbare Ansichtsperspektive bei der Beobachtung der Schleifscheibe 26 durch die Kamera 70, die auf die Objektebene 72 ausgerichtet ist. Der Lichtzeiger 114 projiziert einer Linie 118 auf eine Stirnseite (Flachseite) der Schleifscheibe 26. Auf diese Weise kann auch bei einer verzerrten Darstellung eine jeweilige Höhenposition (Schnitt mit der Objektebene 72) genau angezeigt werden. , Dies kann ebenso mit weiteren Komponenten im Arbeitsraum 18 erfolgen

In Fig. 5 veranschaulicht anhand einer schematischen Darstellung ein verzerrungsbehaftetes Bild 122 der Objektebene 72 aus Sicht der Kamera 70 (vergleiche die Perspektive in den Figuren 2 und 3). Der Abbildung 122 liegt in der Objektebene 72 ein Maschinenkoordinatensystem 124 mit der X-Achse 52 und der Z-Achse 56 zugrunde. Die Unterteilung der Abbildung 122 in (verzerrte) Zeilen und Spalten steht stellvertretend für verschiedene Verzerrungen/Verzeichnungen.

Die in Fig. 5 gezeigte verzerrungsbehaftete Abbildung 122 kann für die Wiedergabe am Bildschirm 68 nicht vollständig kompensiert werden, so dass auch das Wiedergabebild 74 (Fig. 1) verzerrungsverhaftet ist. Fig. 6 veranschaulicht anhand einer schematischen Darstellung den Bildschirm 68 mit einem dortigen Anzeigekoordinatensystem 126, das beispielhaft eine X'-Achse und eine Z'-Achse umfasst. Das Anzeigekoordinatensystem 126 geht beispielhaft auf die in festen Zeilen und Reihen angeordneten Pixel des Bildschirms 68 zurück und ist daher nicht verzerrt.

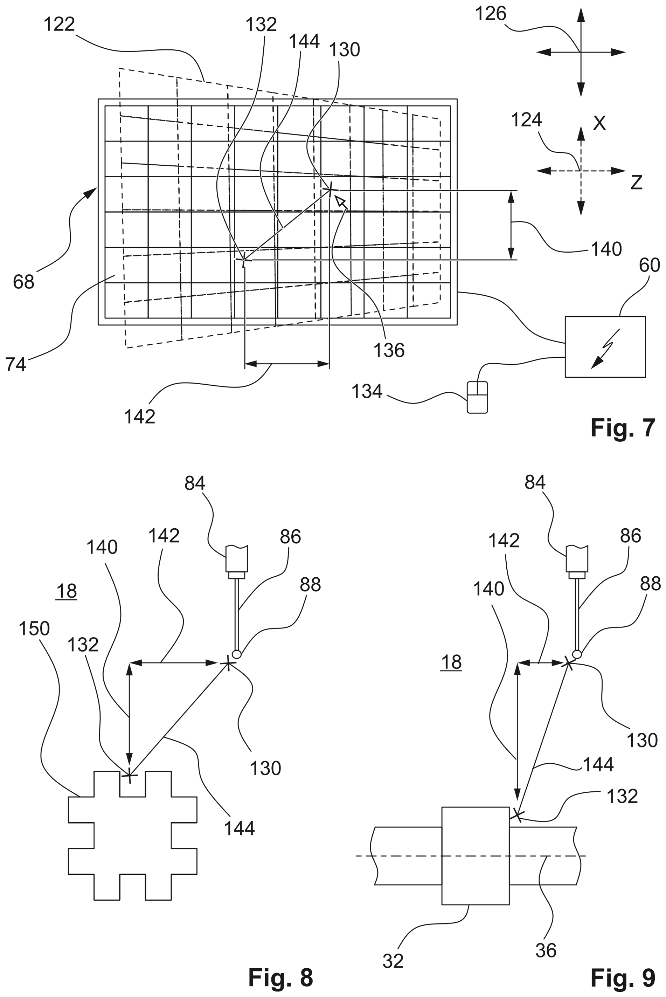

Fig. 7 veranschaulicht anhand einer Überblendung die sich ergebende Darstellung des Wiedergabebildes 74 auf Basis einer verzerrungsbehafteten Abbildung 122 auf dem Bildschirm 68 mit dem dortigen (nicht verzerrten) Anzeigekoordinatensystem 126. Offenbarungsgemäß wird vorgeschlagen, die Kamera 70 optisch in Bezug auf die Objektebene 72 zu kalibrieren, sodass eine "Übertragungsfunktion" zwischen der verzerrungsbehafteten Abbildung 122 der Objektebene 72 mit Bezug auf das Maschinenkoordinatensystem 124 und dem (nicht verzerrten) Anzeigekoordinatensystem 126 ermittelt wird. Auf diese Weise kann eine Transformation zwischen dem Maschinenkoordinatensystem 124 und dem Anzeigekoordinatensystem 126 erfolgen.

Dies erlaubt die Auswahl von Positionen, beispielsweise von einem Startpunkt 130 und einem Zielpunkt 132, im Wiedergabebild 74 (vergleiche Fig. 1) auf dem Bildschirm 68. Ein Bediener kann mit einem Eingabegerät 134 (oder direkt über einen als Touchscreen gestalteten Bildschirm 68) Positionen im Wiedergabebild 74 auswählen, diese werden dann von der Steuereinrichtung 60 unter Berücksichtigung der Transformation zwischen dem Anzeigekoordinatensystem 126 und dem Maschinenkoordinatensystem 124 in Positionswerte im Maschinenkoordinatensystem 124 überführt. Diese Daten können für die Steuerung der Werkzeugmaschine 10 verwendet werden. Entsprechende Positionen (beispielsweise X-Position und/oder Z-Position) im Maschinenkoordinatensystem 124 können ebenso (qualitativ oder quantitativ) auf dem Bildschirm 68 oder einer anderen Anzeige der Bedienerschnittstelle 62 (Fig. 1) ausgegeben werden. Das Eingabegerät 134 ist beispielsweise eine Tastatur, eine Maus, ein Trackball, ein Joystick, ein Touchpad oder ein Touchscreen.

Beispielhaft kann die Steuereinrichtung 60 unter Berücksichtigung des Versatzes 140 entlang der X-Achse und des Versatzes 142 entlang der Z-Achse zwischen dem Startpunkt 130 und dem Zielpunkt 132 im Maschinenkoordinatensystem 124 einen Pfad 144 bestimmen, der den Weg vom Startpunkt 130 zum Zielpunkt 132 beschreibt. Die verfügbaren Positionsinformationen und Weginformationen können dem Bediener angezeigt werden, um eine Rückmeldung zu geben, wenn Komponenten der Werkzeugmaschine 10 bewegt werden. Grundsätzlich ist auch eine automatisierte Bewegung vom Startpunkt 130 zum Zielpunkt 132 vorstellbar. Es ist jedoch auch vorstellbar, dass der Bediener selbst die Bewegung vom Startpunkt 130 zum Zielpunkt 132 durch manuelle Vorgabe der Vorschübe entlang der X-Achse (zur Überwindung des Versatzes 140) und der Z-Achse (zur Überwindung des Versatzes 142) steuert. Dies kann beispielhaft durch Betätigung entsprechender Bedienelemente (Drehrad für den manuellen Vorschub) erfolgen. Wenn eine interpolierte Bewegung entlang des Pfades 144 gewünscht ist, genügt gegebenenfalls auch die Vorgabe eines Vorschubs für die (interpolierten) Achsen.

Trotz der Verzerrung in der Abbildung 122 der Objektebene 72 ist aufgrund der geometrischen Kalibrierung der Kamera 70 sichergestellt, dass Eingaben im Wiedergabebild 74 in korrekte Positionsangaben mit Bezug auf das Maschinenkoordinatensystem 124 überführt werden. Der Bediener kann also visuelle Informationen trotz inhärenter Verzerrungen und Verzeichnungen im Wiedergabebild 74 für die Steuerung der Werkzeugmaschine 10 nutzen.

Mit Bezugnahme auf die Figuren 8-11 werden Anwendungsbeispiele beschrieben, die die offenbarungsgemäße Gestaltung mit der Kamera 70 und die aufgrund der geometrischen Kalibrierung in Bezug auf die Objektebene 72 gegebene Möglichkeit zur Transformation zwischen dem Anzeigekoordinatensystem 126 und dem Maschinenkoordinatensystem 124 nutzen. Die Figuren 8-11 zeigen jeweils eine schematische Draufsicht auf einen Ausschnitt des Arbeitsraums 18, wobei die inhärente Verzerrung/Verzeichnung nicht gezeigt ist.

Fig. 8 zeigt eine Anordnung, bei der eine Messeinheit 84 mit einem einen Messtaster 88 umfassenden Messorgan 86 zum Antasten einer Einrichtreferenz 150 verwendet werden soll. Die Messeinheit 84 ist beispielsweise am Werkzeugspindelstock 20 (vergleiche Fig. 2) angeordnet. Die Einrichtreferenz 150 ist beispielsweise mittelbar oder unmittelbar am Maschinenbett 14 angeordnet, sodass für die Relativbewegung zwischen der Einrichtreferenz 150 und der Messeinheit 84 die Maschinenkinematik 50 nutzbar ist.

Ein Bediener kann nun auf dem Bildschirm 68 anhand des durch die Kamera 70 bereitgestellten Wiedergabebildes 74 (vergleiche Fig. 1) einen Startpunkt 130 und einen Zielpunkt 132 durch Anklicken auswählen, um den Messtaster 88 zumindest in die Nähe der Einrichtreferenz 150 zu fahren. Etwaige Verzerrungen und Verzeichnungen im Wiedergabebild 74 werden ausgeglichen, sodass die Maschinenkinematik 50 der Werkzeugmaschine 10 unter Nutzung von auf Basis der (im Anzeigekoordinatensystem 126 gewählten) Punkte 130, 132 im Maschinenkoordinatensystem 124 bestimmten Positionswerten ansteuerbar ist. Der Zielpunkt 132 entspricht beispielsweise einer Annäherungsposition. Damit kann die Steuerung 60 (vergleiche Fig. 1) einen X-Abstand 140, einen Y-Abstand 142 und einen betragsmäßigen Abstand (entsprechend dem Pfand 144) zwischen den Punkten 130, 132 ermitteln. Es kann sich eine Antastprozedur anschließen, bei der der Messtaster 88 langsam in Kontakt mit der Einrichtreferenz 150 gebracht wird. Die Antastprozedur ist nicht notwendigerweise Bestandteil der offenbarungsgemäßen Lösung.

Fig. 9 veranschaulicht eine vergleichbare Anwendung, bei der die Messeinheit 84 durch entsprechende Bedienereingaben von einem Startpunkt 130 zu einem Zielpunkt 132 verfahrbar ist, um dort in eine Annäherungsposition verbracht zu werden, die beispielsweise Ausgangspunkt für eine antastende Messung an einem Werkstück 32 ist. Es kann sich eine Antastprozedur anschließen, bei der der Messtaster 88 langsam in Kontakt mit dem Werkstück 32 gebracht wird.

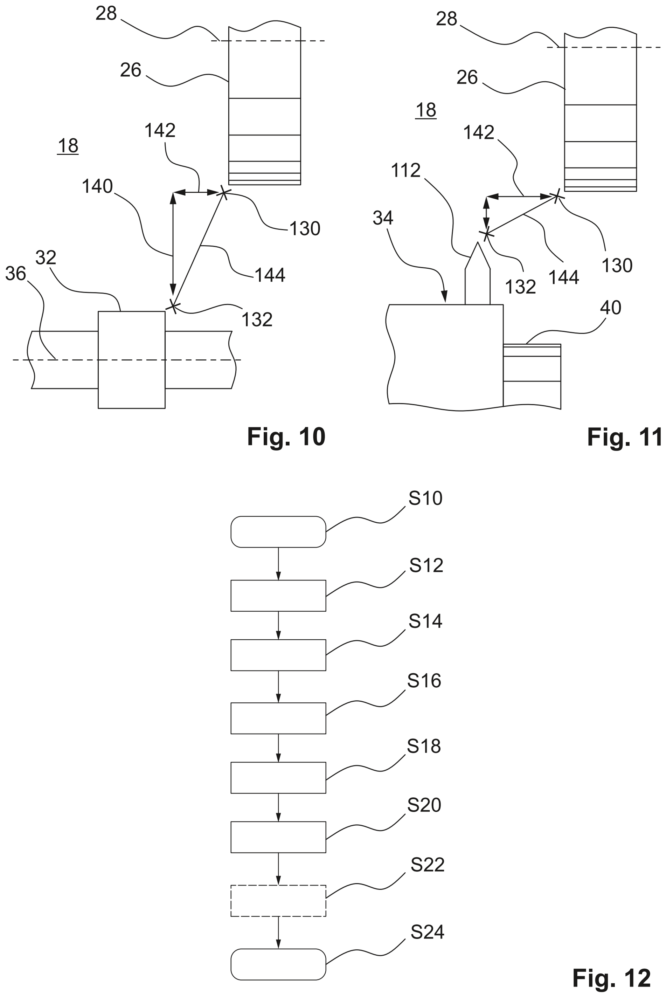

Fig. 10 veranschaulicht eine weitere vergleichbare Anwendung, bei der eine Schleifscheibe 26 durch Anwählen eines Startpunkts 130 und eines Zielpunkts 132 in eine Annäherungsposition in Bezug auf ein Werkstück 32 gebracht wird. Es kann sich eine Prozedur anschließen, bei der die Schleifscheibe 26 langsam in einen Eingriff mit dem Werkstück 32 gebracht wird, um dieses zu bearbeiten.

Fig. 11 veranschaulicht eine weitere vergleichbare Anwendung, bei der eine Schleifscheibe 26 durch Anwählen eines Startpunkts 130 und eines Zielpunkts 132 in eine Annäherungsposition in Bezug auf ein Abrichtwerkzeug 112 gebracht wird, das am Werkstückspindelstock 34 angebracht und der Schleifscheibe 26 zugewandt ist. Es kann sich eine Prozedur anschließen, bei der die Schleifscheibe 26 langsam in einen Eingriff mit dem Abrichtwerkzeug 112 gebracht wird, um dort abgerichtet zu werden.

Das Abrichtwerkzeug 112 kann auch an einer anderen Stelle im Arbeitsraum 18 positioniert werden. Das Abrichtwerkzeug 112 muss nicht zwingend am Werkstückspindelstock 34 angebracht sein. Auch bei solchen Gestaltungen kann auf Basis des Kamerabildes eine visuelle Überwachung und gegebenenfalls eine Steuerung der Verfahrbewegung der Schleifscheibe 26 zur Annäherung an das Abrichtwerkzeug 112 stattfinden.

Fig. 12 veranschaulicht anhand eines schematisch dargestellten Blockdiagramms eine beispielhafte Ausgestaltung eines Verfahrens zum Spitzenwechsel bei einer Schleifmaschine. Das Verfahren beginnt im Ausführungsbeispiel bei einem Schritt S10 und endet bei einem Schritt S24.

Ein Schritt S12 bezieht sich auf eine visuelle Überwachung zumindest eines Teilbereichs des Arbeitsraums einer Werkzeugmaschine, insbesondere einer Schleifmaschine, mit einer Kamera. Die Kamera ist auf eine Objektebene ausgerichtet und in Bezug auf die Objektebene optisch kalibriert.

Die Kamera stellt ein Wiedergabebild bereit, das in einem Schritt S14 auf einem Bildschirm angezeigt wird. Das Wiedergabebild ist optisch verzerrt und gegebenenfalls verzeichnet, weil die Kamera nicht ideal gestaltet und positioniert werden kann. Die geometrische Kalibrierung erlaubt jedoch in Bezug auf die Objektebene eine Transformation, sodass aus Eingaben am Bildschirm im Wiedergabebild auf Positionsangaben (Koordinaten) im Maschinenkoordinatensystem geschlossen werden kann.

In einem Schritt S16 werden Wegpunkte durch einen Bediener im Wiedergabebild ausgewählt. Dies betrifft beispielsweise die Wahl eines Startpunktes und eines Zielpunkts für eine gewünschte Bewegung einer Komponente der Werkzeugmaschine. Die in einem Anzeigekoordinatensystem eingegebenen Werte können transformiert werden, sodass zugehörige Koordinaten in der Objektebene ermittelbar sind, dies erfolgt in einem Schritt S18.

Es kann sich ein Schritt S20 anschließen, indem die ermittelten Positionswerte angezeigt werden. Dies kann sich zunächst auf die Koordinaten für die Startposition (Startpunkt) und die Zielposition (Zielpunkt) im Maschinenkoordinatensystem beziehen. Bei einer Annäherung an den Zielpunkt kann der verbleibende Abstand vom Zielpunkt angezeigt werden, um den Bediener bei der Steuerung der Werkzeugmaschine zu unterstützen.

Ein Schritt S22 kann sich auf die Ansteuerung einer Maschinenkinematik der Werkzeugmaschine beziehen, um die gewünschte Bewegung der Komponente durch Steuerung entsprechender Achsen im Maschinenkoordinatensystem herbeizuführen. Dies kann eine automatisierte Bewegung ohne menschlichen Eingriff umfassen. Es ist jedoch auch eine zumindest teilweise händisch gesteuerte Bewegung vorstellbar, bei der ein Bediener beispielsweise entsprechende Vorschübe für die beteiligten Achsen händisch steuert.

Insgesamt wird auf diese Weise eine manuelle Grobpositionierung oder Vorpositonierung von Komponenten der Werkzeugmaschine ermöglicht, die schnell und einfach mit hoher Genauigkeit und geringer Fehleranfälligkeit vonstattengehen kann. Dies kann sich beispielsweise auf die Positionierung einer Schleifscheibe in Bezug auf ein Werkstück oder ein Abrichtwerkzeug beziehen. Dies kann sich jedoch in ähnlicher Weise auch auf die Positionierung eines Messorgans in Bezug auf ein Werkstück oder eine Einrichtreferenz beziehen. Der Bediener kann die Werkzeugmaschine mit oder ohne händischen Eingriff auf die Maschinenkinematik genau und präzise steuern, ohne dass Ist-Positionen wiederholt durch einen direkten Blick in den Arbeitsraum kontrolliert werden müssen. Damit sinkt die Belastung für den Bediener, auch die Gefahr von Fehlbedienungen kann reduziert werden. Einrichtvorgänge können unterstützt und vereinfacht werden.

## Patentansprüche

1. Werkzeugmaschine (10), insbesondere Schleifmaschine (12), die Folgendes aufweist:
- ein Maschinenbett (14),
- eine Einhausung (16), die einen Arbeitsraum (18) umschließt,
- einen im Arbeitsraum (18) angeordneten Werkzeugspindelstock (20) zur Aufnahme eines Werkzeugs (24), insbesondere einer Schleifscheibe (26),
- einen im Arbeitsraum (18) angeordneten Werkstückhalter (40), insbesondere eine Werkstückspindel (38), zur Aufnahme eines Werkstücks (32),
wobei der Werkzeugspindelstock (20) und der Werkstückhalter (40) mittels einer Maschinenkinematik (50) relativ zueinander in zumindest zwei Achsen (52, 56) NC-gesteuert verfahrbar sind, um ein am Werkstückhalter (40) gehaltenes Werkstück (32) zu bearbeiten,
- eine auf eine Objektebene (72) ausgerichtete Kamera (70) zur visuellen Überwachung zumindest eines Teilbereichs des Arbeitsraumes (18),
wobei die Kamera (70) dazu ausgebildet ist, eine Abbildung der Objektebene (72) zu erzeugen, und
wobei die Kamera (70) in Bezug auf die Objektebene (72) geometrisch kalibriert ist,
- einen Bildschirm (68) zur Anzeige eines Wiedergabebildes (74) der von der Kamera (70) bereitgestellten Abbildung der Objektebene (72), und
- eine Steuereinrichtung (60), die dazu ausgebildet ist, Bedienereingaben im Wiedergabebild (74) in Positionswerte in einem Maschinenkoordinatensystem (124) zur Steuerung der Maschinenkinematik (50) zu wandeln.

2. Werkzeugmaschine (10) nach Anspruch 1, wobei die Steuereinrichtung (60) dazu ausgebildet ist, anhand eines im Wiedergabebild (74) ausgewählten Startpunkts (130) und eines im Wiedergabebild (74) ausgewählten Zielpunkts (132) im Maschinenkoordinatensystem (124) einen zu überwindenden Weg (140, 142) zwischen dem Startpunkt (130) und dem Zielpunkt (132) anzuzeigen.

3. Werkzeugmaschine (10) nach Anspruch 2, wobei die Steuereinrichtung (60) dazu ausgebildet ist, bei einer Relativbewegung zwischen dem Werkzeugspindelstock (20) und dem Werkstückhalter (40) zur Annäherung an den Zielpunkt (132) einen verbliebenden Restweg anzuzeigen.

4. Werkzeugmaschine (10) nach einem der Ansprüche 1-3, wobei die Steuereinrichtung (60) dazu ausgebildet ist,
die Maschinenkinematik (50) zur Erzeugung einer Relativbewegung zwischen dem Werkzeugspindelstock (20) und dem Werkstückhalter (40) auf Basis der Bedienereingaben und der hierauf fußenden Positionswerte mittels Streckensteuerung oder Bahnsteuerung anzusteuern, und/oder
die Bedienereingaben in Positionswerte zu wandeln und absolute oder relative Veränderungen der Positionswerte bei der Steuerung der zumindest zwei Achsen (52, 56) anzuzeigen.

5. Werkzeugmaschine (10) nach einem der Ansprüche 1-4, wobei die Kamera (70) im Arbeitsraum (18) oberhalb des Werkstückhalters (40) angeordnet ist, und/oder wobei die Objektebene (72) eine Horizontalebene ist, die parallel zu einer durch den Werkstückhalter (40) definierten Längsachse (36) orientiert ist.

6. Werkzeugmaschine (10) nach einem der Ansprüche 1-5, wobei die Kamera (70) eine perspektivische Abbildung der Objektebene (72) erzeugt und insbesondere ortsfest innerhalb der Einhausung (16) angeordnet ist, und/oder wobei das Wiedergabebild (74) verzerrungsbehaftet ist und insbesondere eine projektive Verzerrung und/oder eine perspektivische Verzerrung aufweist.

7. Werkzeugmaschine (10) nach einem der Ansprüche 1-6, ferner aufweisend ein Eingabegerät (134) zur Erfassung der Bedienereingaben im Wiedergabebild (74), wobei das Eingabegerät (134) zumindest als berührempfindliches Eingabegerät zur direkten Eingabe am Bildschirm (68) oder als Eingabegerät zur indirekten Eingabe ausgestaltet ist.

8. Werkzeugmaschine (10) nach einem der Ansprüche 1-7, ferner aufweisend:
- zumindest einen Lichtzeiger (114), insbesondere einen Linienlaser, zur Projektion zumindest eines Punkts oder einer Linie (118) auf zumindest ein gegenüber der Objektebene (72) geneigtes Maschinenteil, insbesondere eine Schleifscheibe (26), zur Hervorhebung eines Schnittpunkts oder einer Schnittlinie zwischen dem Maschinenteil und der Objektebene (72), und/oder
- eine Hilfskamera (108) zur Erzeugung einer Hilfsansicht, wobei die Einhausung (16) eine Zugangsöffnung (64) bereitstellt, und wobei die Hilfskamera (108) auf eine von der Zugangsöffnung (64) abgewandte Rückseite des Werkstückhalters (40) ausgerichtet ist.

9. Werkzeugmaschine (10) nach einem der Ansprüche 1-8, wobei die Kamera (70) zwei oder mehr Fokusbereiche bereitstellt, und wobei zwei oder mehr Objektebenen (72) mit unterschiedlichem Objektabstand definiert sind, die an die zwei oder mehr Fokusbereiche angepasst sind.

10. Werkzeugmaschine (10) nach einem der Ansprüche 1-9, wobei das Werkzeug (24) eine Schleifscheibe (26) ist, wobei im Arbeitsraum (18), insbesondere beim Werkstückhalter (40), zumindest ein Abrichtwerkzeug (112) angeordnet ist, und wobei die Steuereinrichtung (60) dazu ausgebildet ist, auf Basis der Bedienereingaben im Wiedergabebild (74) Positionswerte im Maschinenkoordinatensystem (124) zur Annäherung der Schleifscheibe (26) an das Abrichtwerkzeug (112) auszugeben.

11. Werkzeugmaschine (10) nach einem der Ansprüche 1-10, wobei im Arbeitsraum (18) eine Einrichtreferenz (150) angeordnet ist, und wobei die Steuereinrichtung (60) dazu ausgebildet ist, auf Basis der Bedienereingaben im Wiedergabebild (74) Positionswerte im Maschinenkoordinatensystem (124) zur Annäherung eines Werkzeugs (24) oder eines Messorgans (86) an die Einrichtreferenz (150) auszugeben.

12. Werkzeugmaschine (10) nach einem der Ansprüche 1-11, wobei am Werkzeugspindelstock (20) eine Messeinheit (84) mit zumindest einem Messorgan (86) angeordnet ist, und wobei die Steuereinrichtung (60) dazu ausgebildet ist, auf Basis der Bedienereingaben im Wiedergabebild (74) Positionswerte im Maschinenkoordinatensystem (124) zur Annäherung des Messorgans (86) an die Einrichtreferenz (150) oder das Werkstück (32) auszugeben.

13. Verfahren zur Steuerung einer Werkzeugmaschine (10) nach einem der Ansprüche 1-12, mit den folgenden Schritten:
- visuelles Überwachen zumindest eines Teilbereichs des Arbeitsraumes (18) mit der auf die Objektebene (72) ausgerichteten Kamera (70),
- Anzeige eines Wiedergabebildes (74) der von der Kamera (70) bereitgestellten Abbildung der Objektebene (72) auf einem Bildschirm (68),
- Auswahl von Wegpunkten in dem auf dem Bildschirm (68) angezeigten Wiedergabebild (74), insbesondere Auswahl eines Startpunkts (130) und eines Endpunkts,
- Bestimmung von Positionswerten im Maschinenkoordinatensystem (124) auf Basis der auf dem Bildschirm (68) gewählten Wegpunkte unter Berücksichtigung der geometrischen Kalibrierung der Kamera (70) in Bezug auf die Objektebene (72), und
- Anzeige der Positionswerte auf dem Bildschirm (68).

14. Verfahren nach Anspruch 13, ferner aufweisend:
- Ansteuern der Maschinenkinematik (50) zur Erzeugung einer Relativbewegung zwischen dem Werkzeugspindelstock (20) und dem Werkstückhalter (40) und/oder zwischen dem Werkzeugspindelstock (20) und einem Abrichtwerkzeug (112) im Arbeitsraum (18), und
- Anzeige von absoluten oder relativen Veränderungen der Positionswerte während der Relativbewegung.

15. Verfahren nach Anspruch 13 oder 14, ferner aufweisend:
- Projizieren zumindest eines Punkts oder einer Linie (118) auf ein gegenüber der Objektebene (72) geneigtes Maschinenteil zur Hervorhebung eines Schnittpunkts oder einer Schnittlinie zwischen dem Maschinenteil und der Objektebene (72), wobei die Projektion insbesondere auf ein am Werkzeugspindelstock (20) aufgenommenes Werkzeug (24) erfolgt.
